# EUROPEAN PATENT APPLICATION

(11) **EP 1 854 349 A1**
(43) Date of publication of application: **14.11.2007**
(21) Application number: 06425326.3
(22) Date of filing: 12.05.2006
(51) Int. Cl.: A01K 13/00

(54) **Device and method for drying domestic animals**

(71) Applicant: Menghinelli, Jordan, 05100 Terni (IT); Capoccetti, Alessandro, 05036 Narni (TR) (IT)
(72) Inventor: Menghinelli, Jordan, 05100 Terni (IT); Capoccetti, Alessandro, 05036 Narni (TR) (IT)
(74) Representative: Valentini, Giuliano

(57) **Abstract**

A device and a method for drying pets is described, wherein a lower drying unit (20) generates a hot air stream flowing through a drilled surface (25), and wherein an upper drying unit (30) is provided with one or more infrared-emitting units (35).

## Description

The present invention relates to a device and a method for drying pets, and particularly dogs.

In pet washes, drying devices are generally used which comprise a lower drying unit having at least one drilled surface on which the animal to be dried is supported. Suitable means are provided for generating a hot air stream flowing through the drilled surface in order to generate a hot air stream allowing one to dry the lower part of the animal. To dry the upper part of the animal, a hairdryer is generally used which is manually operated by a person.

These drying systems make the animal irritable, mainly due to the use of a hairdryer. In fact, the noise of the appliance and the pressurized jet of air are irritating to the animal. Consequently, the drying operation may give rise to problems, not only for skilled staff, but even more for a client who personally deals with the drying of his/her animal.

Furthermore, the pressurized jet of air produced by a hairdryer causes a considerable amount of the animal's hair and small particles to be spread in the environment, which besides messing up the surrounding environment, may also undermine the health of those dealing with the drying.

Having said that, the task of the present invention is to provide a device and a method for drying animals, which allow avoiding disturbance to the animal's comfort during the drying step.

Within this task, an object of the present invention is to provide a device and a method allowing one to carry out the drying of animals in a noiseless manner pleasing to the animal.

Another object of the present invention is to provide a device and a method for drying animals, which is user-friendly.

A further object of the present invention is to provide a device and a method allowing one to carry out the drying of animals in a short time, with little energy-consumption and in a more healthy manner as compared with the prior art systems.

These objects are achieved by the present invention, which relates to a device for drying pets, comprising a lower drying unit having at least one drilled surface on which the animal to be dried is supported, means for generating a hot air stream flowing through the drilled surface, and at least one upper drying unit being fastened to a support frame in an upper position relative to the drilled surface and provided with one or more infrared-emitting units.

Particularly, the infrared-emitting units can consist of, for example, infrared lamps.

According to an advantageous aspect of the present invention, the upper drying unit is movable in the vertical direction relative to the support frame, such that it can be moved toward to or away from the lower drying unit. An electric motor can be also advantageously provided in order to move the upper drying unit relative to the support frame in a controlled manner. This allows the device to be easily adapted to the size of the animal to be dried.

In a possible embodiment of the present invention, a suction hood can be also advantageously provided, which is integrated in the upper drying unit. This allows one to effectively remove the animal's hair and particles from the drying area, as a small circulation of air is further generated from the lower drying unit to the upper drying unit without bothering the animal.

A device according to the present invention is easy to implement and can also be easily adapted to the available drying devices which are provided only with the lower drying unit.

The invention further relates to a method for drying pets, in which a hot air stream is provided to be generated through a drilled surface on which the animal to be dried is supported, characterized by further providing a heating action that is carried out by one or more units emitting infrared radiation at least on the upper part of the animal's body.

The invention thus provides a system for drying animals, which does not bother the animal and can be easily used also by unskilled staff. This makes it suitable also for being installed in self-service dog washes, or pet washes.

Further characteristics and advantages of the present invention will appear more clearly from the description below with reference to the annexed schematic drawings, in which:
- Fig. 1 is a perspective view of several components of the device according to a possible embodiment of the present invention;
- Fig. 2 is a bottom plan view of the upper drying unit in a device according to the present invention; and
- Fig. 3 is a sectional side view of other components of a device according to the present invention.

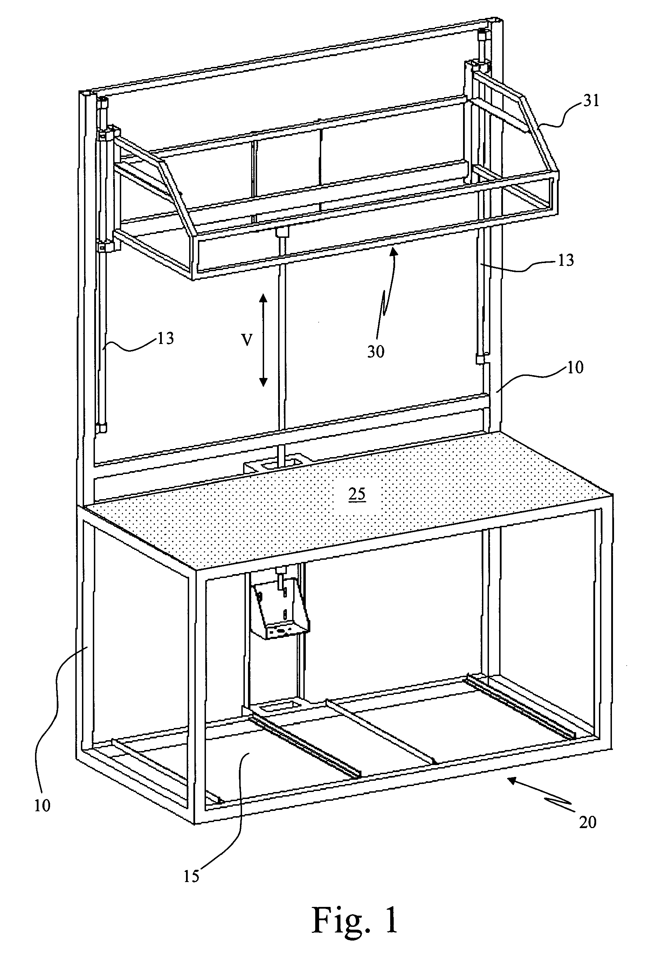

In the embodiment from Fig. 1, there is illustrated a device for drying pets according to the present invention, which essentially comprises a lower drying unit 20 with a support frame 10 that defines a compartment 15 in which there is housed at least the equipment (not shown) for generating a hot air stream flowing through a drilled surface 25 on which the animal to be dried is supported.

This equipment for generating a hot air stream, which is already known in the art, can comprise for example a boiler for heating a thermal exchange fluid such as water or glycol, a heat exchanger between the fluid and air, a fan to generate a hot air stream to be directed through the drilled plate 25, as well as means for controlling the temperature of the fluid and/or air, such as thermostats or other similar control devices. Other known equipment comprises electrical resistances and fans to generate a hot air stream.

According to the present invention, the device further comprises an upper drying unit 30 being essentially represented herein by the frame portion 31 thereof which is fastened to the main frame 10. The upper drying unit 30 is movably fastened to the frame 10 via guide rods 13 allowing the same to be moved in the vertical direction (arrow V) either toward to or away from the lower drying unit 20, in order to adjust the distance between the two drying units 20 and 30 as a function of the size of the animal to be dried.

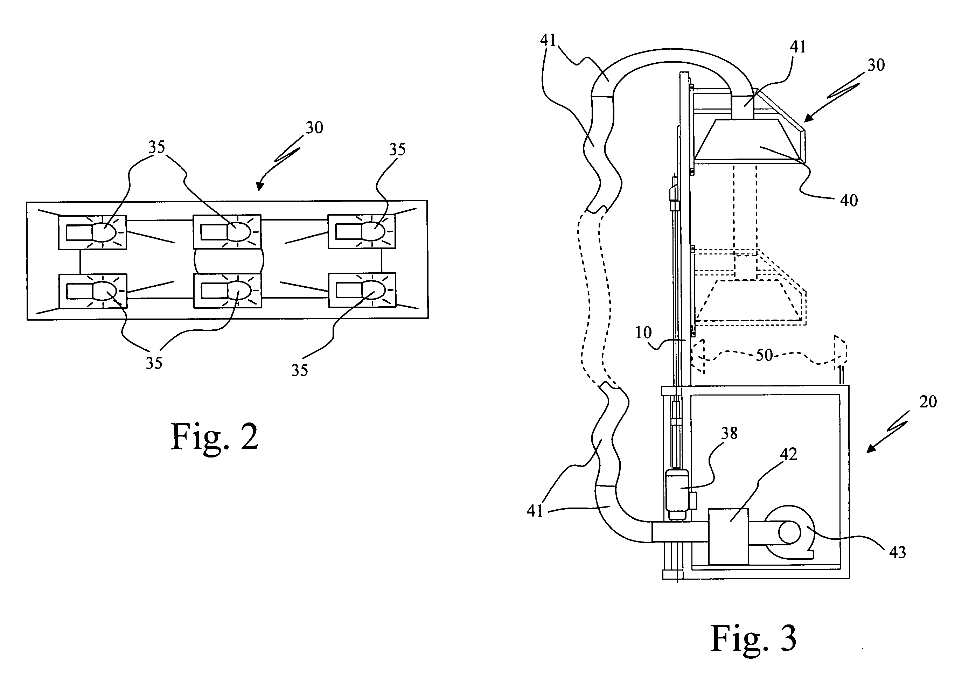

According to a specific aspect of the present invention, the upper drying unit 30 comprises one or more infrared-emitting units. A possible embodiment is represented in Fig. 2, in which the infrared-emitting units consist of lamps 35 for emitting infrared light.

Drying is thus obtained due to the action of the hot air stream flowing through the drilled surface 25 in cooperation with the heating action carried out by the infrared-emitting units, or lamps 35. The latter can be further moved toward or away, along with all the upper drying unit 30 in order to change the heating action applied by the infrared radiation.

In Fig. 3 further components are illustrated of the drying device according to the present invention. For example, an electric motor 38 can be advantageously provided for moving the upper drying unit 30 in a controlled manner relative to the support frame 10 between at least one closest position (shown with a dotted line) and at least one farthest position relative to the lower drying unit 20.

According to another advantageous aspect of the present invention, the upper drying unit 30 incorporates a suction hood 40 to remove the animal's hair and/or particles from the drying area. The hood 40 is connected to a set of ducts 41, a filtering unit 42 and a suction fan 43. The filtering unit 42 preferably comprises removable filters that are arranged such as to be easily removed by the operators for routine cleaning operations.

The use of the device according to the present invention is particularly easy and does not require the presence of skilled operators. After the animals have been washed, they are placed on the drilled surface 25, after the upper drying unit 30 has been properly positioned as a function of the animal's size.

The drying units 20 and 30 are then turned on by means of a switch, which activates the hot air stream flowing through the drilled surface 25 and turns on the infrared-emitting lamps 35, and also simultaneously activates the suction system for removing the hair and particles from the animal's supporting area. The upper drying unit 30 allows drying the animal's head, back, ears, and snout, while the lower drying unit 20 dries the animal's paws, belly, under tail and throat.

The device according to the invention allows generating a uniform heat area, which completely surrounds the animal, without however using peripheral barriers, which contribute to cause annoyance to the animal. The temperature within this area can be effectively controlled by acting on the suitable temperature adjusting means associated with the equipment for generating a hot air stream, which are provided in the lower drying unit 20.

It should be further noted that the device can comprise side drying means being arranged between the upper drying unit 30 and the lower drying unit 20.

These side drying means can comprise for example one or more nozzles 50 (shown with a dotted line) for delivering hot air, which are anchored to the support frame 10 and/or the upper unit 30. The hot air from the nozzles 50 can be produced by the same equipment as mentioned above for the generation of the hot air which passes through the drilled surface 25, or alternatively, similar separate equipment other than the latter.

Thereby, besides being subjected to the synergic action of the two drying units 30 and 40, the animal is also subjected to the heating action of the side drying means, which, by acting directly on the animal's sides, allow the final drying process to be further accelerated.

It has been found that the animals can be dried in a short time, about 5 to 20 minutes, depending on the animal's size and hair length, in an almost noiseless manner and without the assistance of skilled operators.

Various modifications to the embodiments described herein can be carried out without departing from the scope of the present invention. For example, the type and number of the infrared-emitting units can also be other than what has been represented herein, and they can be also provided with devices allowing one to adjust their emission power.

## Claims

1. A device for drying pets, **characterized by** comprising a lower drying unit having at least one drilled surface on which the animal to be dried is supported, means for generating a hot air stream flowing through said drilled surface, and at least one upper drying unit being fastened to a support frame in an upper position relative to said drilled surface and provided with one or more infrared-emitting units.

2. The device according to claim 1, wherein said infrared-emitting units consist of infrared-emitting lamps.

3. The device according to claim 1, wherein said upper drying unit is movable in the vertical direction relative to said support frame, in order to allow the same moving toward to or away from said lower drying unit.

4. The device according to claim 3, wherein at least one electric motor is provided to move said upper drying unit relative to said support frame in a controlled manner.

5. The device according to claim 1, wherein means are provided for controlling the temperature in the waiting area for said animal between said lower drying unit and said upper drying unit.

6. The device according to claim 1, wherein at least one suction hood is provided which is integrated in said upper drying unit.

7. The device according to claim 6, wherein one or more removable filters are provided which are connected to said suction hood by means of a pneumatic circuit.

8. The device according to any preceding claim, **characterized by** comprising side drying means that are arranged between said upper drying unit and said lower drying unit.

9. The device according to claim 8, **characterized in that** said side drying means comprise nozzles for delivering hot air to the animal's sides.

10. A method for drying pets, **characterized by** providing a hot air stream being generated through a drilled surface on which the animal to be dried is supported and a heating action that is carried out by one or more infrared-emitting units at least on the upper part of the animal's body.

11. The method according to claim 10, wherein said one or more infrared-emitting units are movable toward to or away from the drilled surface on which the animal is supported.

12. The method according to claim 10, wherein the control of the temperature is provided in the waiting area of the animal between said lower drilled surface and said one or more infrared-emitting units.

13. The method according to claim 10, wherein the suction of air is further provided in the animal's waiting area between said lower drilled surface and said one or more infrared-emitting units.

14. The method according to claim 10, wherein the drying is further provided by means of hot air directed to the animal's sides via of a plurality of nozzles.
